# EUROPEAN PATENT SPECIFICATION

(11) **EP 2 540 915 B1**
(45) Date of publication and mention of the grant of the patent: **20.02.2019**
(21) Application number: 10846173.2
(22) Date of filing: 01.12.2010
(51) Int. Cl.: E02F 9/00, E02F 9/22, E02F 9/20, E02F 9/08, B60K 11/08

(54) **ELECTRICAL CONSTRUCTION MACHINE**
ELEKTRISCHE BAUMASCHINE
MACHINE DE CONSTRUCTION ÉLECTRIQUE

(30) Priority: 22.02.2010 JP 2010035910
(43) Date of publication of application: 02.01.2013
(73) Proprietor: Hitachi Construction Machinery Tierra Co., Ltd., Koka-shi, Shiga 528-0061 (JP)
(72) Inventor: YUNOUE Masayuki, Tsuchiura-shi Ibaraki 300-0013 (JP); NOGUCHI Akira, Tsuchiura-shi Ibaraki 300-0013 (JP)
(74) Representative: MERH-IP Matias Erny Reichl Hoffmann Patentanwälte PartG mbB
(86) International application number: PCT/JP2010/071489
(87) International publication number: WO 2011/102042

(56) References cited:
- JP-A- H11 140 906
- JP-A- 2002 227 241
- JP-A- 2002 227 241
- JP-A- 2004 169 464
- US-A1- 2004 098 983

## Description

### TECHNICAL FIELD

The present invention relates to an electrical construction machine such as a hydraulic excavator, a wheel loader, or the like equipped with an electric motor as its power source.

### BACKGROUND ART

Generally, a construction machine such as a hydraulic excavator which is used in excavating operations and demolition operations employs an engine (internal combustion engine) as a power source, and a hydraulic pump is driven by this engine. The arrangement provided is such that pressure oil (working oil) is supplied from the hydraulic pump to various hydraulic actuators including a hydraulic motor for traveling, a hydraulic motor for revolving, a hydraulic cylinder for constituting a working mechanism, and the like.

Meanwhile, in order to prevent the working environment from deteriorating due to exhaust gas from the engine at the time of performing an excavating operation or a demolition operation within, for example, a building structure such as a storage, a building, an electrical hydraulic excavator has been proposed which has an electric motor as a power source for driving the hydraulic pump instead of the engine and a battery for supplying electricity to this electric motor.

The electrical hydraulic excavator according to this conventional art is constructed such that an operator's seat is arranged on the left side in the left-right direction of an upper revolving structure, the hydraulic pump, the electric motor, an oil tank, a heat exchanger (oil cooler), and the like are arranged on the right side of the operator's seat, and the battery is arranged on the rear side of the operator's seat. The hydraulic pump, the electric motor, the oil tank, the heat exchanger, the battery, and the like are accommodated in an identical accommodating space (namely, a single accommodating space) covered by a cover, and the hydraulic pump, the electric motor, the oil tank, the heat exchanger, and the like are arranged to be cooled by cooling air which is circulated in the accommodating space by a cooling fan (e.g., Japanese Patent Laid-Open No. Hei 11-149906 A).

In JP H11140906 A an electric fan cools an electric motor and an oil cooler and discharges toxic gases generated from a battery when it is charged. Air from the electric fan in a cover flows in the direction of the arrow. A hydraulic oil tank that must be cooled during operation, the electric motor, the oil cooler, and the battery that requires air circulation while it is charged are arranged in the flow of air from an inlet to the electric fan.

### SUMMARY OF THE INVENTION

Incidentally, it is known that the performance of a lithium ion battery which is suitably used for mounting in a vehicle normally declines when the ambient temperature reaches 50°C or higher. However, the above-described electrical hydraulic excavator according to the conventional art is so arranged that the hydraulic pump, the electric motor, the oil tank, the heat exchanger, the battery, and the like are accommodated in the single accommodating space covered by the cover.

For this reason, with the electrical hydraulic excavator according to the conventional art, there is a problem in that heat which is generated from the hydraulic pump, the electric motor, the oil tank, the heat exchanger, and the like is easily transmitted to the battery accommodated in the same accommodating space as these items of equipment, disadvantageously causing the life of the battery to decline.

Particularly in the case where outside air is sucked into the accommodating space by a cooling fan and this outside air is sequentially supplied to the oil tank, the hydraulic pump, the electric motor, the heat exchanger, and the battery as cooling air, the cooling air is gradually heated due to the cooling of the oil tank and the like. Accordingly, as this heated cooling air is supplied toward the battery, there is a problem in that the life of the battery is reduced at an early time.

Meanwhile, in a case where the air in the accommodating space is exhausted to the outside by the cooling fan, since the air in the accommodating space is sequentially supplied to the battery, the heat exchanger, the electric motor, the hydraulic pump, and the oil tank, there is a problem in that it becomes impossible to sufficiently cool the oil tank and the like which are arranged on the downstream side of the air flow.

In view of the above-discussed problems with the conventional art, it is an object of the present invention to provide an electrical construction machine which is capable of protecting the battery from the heat generated from the installed equipment such as the hydraulic pump, the electric motor, and the like arranged in a machine room and is capable of efficiently cooling the installed equipment arranged in the machine room.
(1) To solve the problems the features of the independent claims are suggested. Preferred developments are in the dependent claims. An electrical construction machine includes a vehicle body frame which constitutes a support
   structure of a vehicle body and which has a working mechanism mounted on a front side in a front-rear direction; an operator's seat provided on the vehicle body frame on a left side in a left-right direction; a hydraulic pump provided on a right side of the operator's seat to supply hydraulic oil to the working mechanism; an electric motor for driving the hydraulic pump; an inverter for controlling a drive voltage of the electric motor; an oil tank for storing the hydraulic oil which is supplied to the working mechanism; a heat exchanger for cooling a heated fluid; a battery provided on a rear side of the operator's seat to effect the feeding of electric power to the electric motor; and an exterior cover provided in such a manner as to cover the hydraulic pump, the electric motor, the inverter, the oil tank, the heat exchanger, and the battery.
   Further, a characteristic feature of the construction adopted in the present invention lies in that the vehicle body frame is provided with a partition plate for partitioning an interior of the exterior cover into a machine room for accommodating the hydraulic pump, the electric motor, the inverter, the oil tank, and the heat exchanger and into a battery room for accommodating the battery, and a cooling fan for circulating cooling air inside the machine room is provided in the machine room.
   With this arrangement, by providing the partition plate, the interior of the exterior cover can be partitioned into the battery room for accommodating the battery and into the machine room for accommodating the hydraulic pump, the electric motor, the inverter, the oil tank, and the heat exchanger. In consequence, heat generated from the mounted equipment such as the hydraulic pump and the electric motor can be restrained by the partition plate from being transmitted to the battery, thereby making it possible to maintain the surroundings of the battery at an appropriate temperature. As a result, the feeding of electric power from the battery to the electric motor can be effected stably over a long period of time, making it possible to enhance the reliability of the construction machine. Moreover, as cooling air is circulated in the machine room by the cooling fan provided in the machine room, the mounted equipment such as the hydraulic pump and the electric motor can be reliably cooled by the cooling air.
(2) In the present invention, the oil tank is arranged on a front side of the machine room, the electric motor and the hydraulic pump are arranged on a rear side of the machine room, the inverter is arranged upwardly of the electric motor and the hydraulic pump, and the cooling fan and the heat exchanger are arranged forwardly of the electric motor, the hydraulic pump, and the inverter and rearwardly of the oil tank.
   With this arrangement, as the cooling fan and the heat exchanger are arranged forwardly of the electric motor, the hydraulic pump, and the inverter and rearwardly of the oil tank, the cooling air which is circulated in the machine room by the cooling fan can be divided into a first cooling air route for cooling the oil tank and a second cooling air route for cooling the electric motor, the hydraulic pump, and the inverter. As a result, the oil tank can be efficiently cooled by the cooling air flowing along the first cooling air route, and the electric motor, the hydraulic pump, and the inverter can be efficiently cooled by the cooling air flowing along the second cooling air route.
(3) According to the present invention, the cooling fan is constituted by a blow-out type cooling fan which blows air in the machine room to an outside, and the exterior cover is provided with an oil tank cooling air inlet port provided at a position opposing to the oil tank to suck outside air to the oil tank, an inverter cooling air inlet port provided at a position opposing to the inverter to suck the outside air to the inverter, and an exhaust port provided at a position opposing to the cooling fan to exhaust the air in the machine room by the cooling fan.
   By adopting this arrangement, when the blow-out type cooling fan is operated, outside air is sucked into the machine room through the oil tank cooling air inlet port of the exterior cover. This cooling air flows in the machine room along the first cooling air route for cooling the oil tank, and is then exhausted to the outside through the exhaust port of the exterior cover after cooling the heat exchanger. At the same time, the outside air is sucked into the machine room through the inverter cooling air inlet port of the exterior cover. This outside air flows in the machine room along the second cooling air route for cooling the electric motor, the hydraulic pump, and the inverter, and is then exhausted to the outside through the exhaust port of the exterior cover after cooling the heat exchanger.
   As a result, the oil tank can be efficiently cooled by the outside air introduced into the machine room from the oil tank cooling air inlet port, and the electric motor, the hydraulic pump, and the inverter can be efficiently cooled by the outside air introduced into the machine room from the inverter cooling air inlet port. Furthermore, the heat exchanger can be efficiently cooled by the large quantity of outside air introduced into the machine room from the oil tank cooling air inlet port and the inverter cooling air inlet port.
(4) Meanwhile, in the present invention, a communicating hole for allowing the machine room and the battery room to communicate with each other is provided in the partition plate. As a result, the air inside the battery room can be allowed to flow into the machine room through the communicating hole, and can be exhausted to the outside through the exhaust port of the exterior cover, thereby making it possible to restrain the interior of the battery room from assuming a high temperature owing to the heat generated by the battery.
(5) In the case of the invention according to item (4) above, an auxiliary fan for leading the air inside the battery room into the machine room through the communicating hole is provided in the partition plate. With this arrangement, when the auxiliary fan provided in the partition plate is operated, the air inside the battery room is introduced into the machine room through the communicating hole of the partition plate, and is then exhausted to the outside through the exhaust port together with the cooling air flowing in the machine room. Thus, since the air inside the battery room heated by the heat generated by the battery can be forcibly exhausted to the machine room by using the auxiliary fan, the surroundings of the battery can be maintained at an appropriate temperature, thereby making it possible to prolong the life of the battery.
(6) In the present invention, a flat plate-shaped motor-pump support plate for supporting the electric motor and the hydraulic pump is provided on the vehicle body frame, and a motor-pump cooling air inlet port for sucking the outside air toward the electric motor and the hydraulic pump is provided in the motor-pump support plate.
   With this arrangement, the electric motor and the hydraulic pump are placed on the motor-pump support plate. When the blow-out type cooling fan is operated, outside air is sucked into the machine room through the motor-pump cooling air inlet port of the motor-pump support plate, and this outside air can be directly supplied to the electric motor and the hydraulic pump along the second cooling air route, so that the electric motor and the hydraulic pump can be cooled more efficiently by this outside air.
(7) In the present invention, it is possible to adopt a construction in which the electric motor is covered by a motor case having a water jacket, and the inverter is covered by an inverter case accommodating an inverter circuit and having a water jacket, cooling water being arranged to be circulated through the water jackets of the motor case and the inverter case.
   With this arrangement, the electric motor is cooled by the cooling air flowing in the machine room and by the cooling water flowing through the water jacket of the motor case. Meanwhile, the inverter is cooled by the cooling air flowing in the machine room and by the cooling water flowing through the water jacket of the inverter case. Accordingly, it is possible to further enhance the efficiency of cooling the electric motor and the inverter.
(8) In the case of the invention according to item (7) above, the heat exchanger is constituted by an oil cooler and a radiator, the oil cooler being adapted to cool the hydraulic oil which is recirculated into the oil tank, the radiator being adapted to cool the cooling water flowing through the water jackets of the motor case and the inverter case.
   With this arrangement, as the heat of the cooling water flowing through the water jacket of the motor case and the heat of the cooling water flowing through the water jacket of the inverter case are radiated to the cooling air by the radiator, it is possible to efficiently cool the electric motor and the inverter. Meanwhile, as the heat of the hydraulic oil (return oil) which is recirculated into the oil tank is radiated to the cooling air by the oil cooler, and the oil tank is cooled by the outside air introduced into the machine room from the oil tank cooling air inlet port, it is possible to further enhance the efficiency of cooling the oil tank.
(9) In the present invention, the vehicle body is constituted by an automotive lower traveling structure and an upper revolving structure which is swingably mounted on the lower traveling structure, and the vehicle body frame constitutes a support structure of the upper revolving structure.
   With this arrangement, the interior of the exterior cover can be partitioned into the battery room for accommodating the battery and into the machine room for accommodating the hydraulic pump, the electric motor, the inverter, the oil tank, and the heat exchanger by the partition plate provided on the vehicle body frame of the upper revolving structure. Hence, the electrical construction machine in accordance with the present invention is applicable to an electrical hydraulic excavator, an electrical hydraulic crane, or the like which has a lower traveling structure and an upper revolving structure.

### BRIEF DESCRIPTION OF THE DRAWINGS

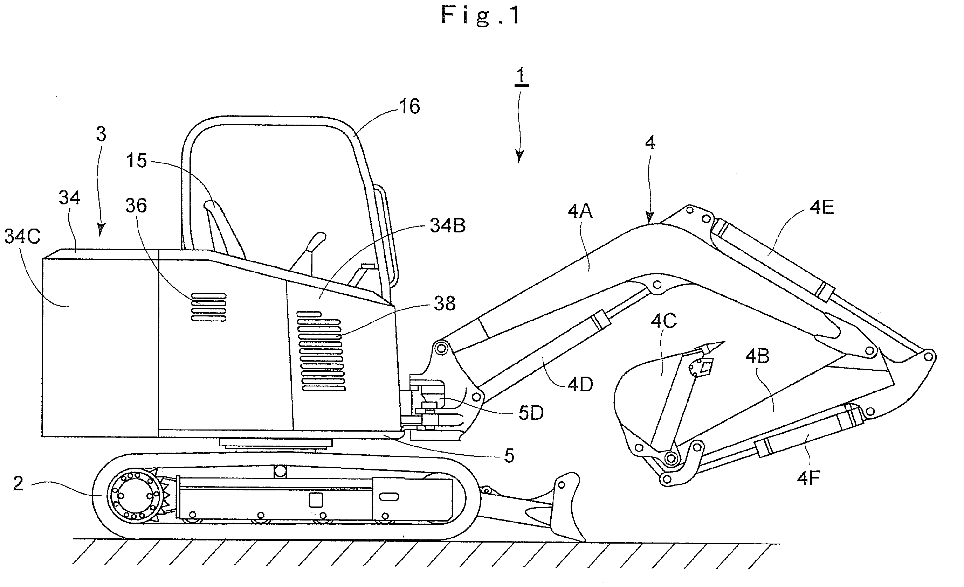

Fig. 1 is a front view illustrating an electrical hydraulic excavator in accordance with an embodiment of the present invention.
Fig. 2 is a plan view of the hydraulic excavator taken from above.
Fig. 3 is a cross-sectional view of an upper revolving structure taken from the direction of arrows III - III in Fig. 2.
Fig. 4 is a cross-sectional view of the upper revolving structure taken from the direction of arrows IV - IV in Fig. 3 with a canopy installed thereon.
Fig. 5 is a perspective view illustrating a state in which a support member is mounted on a revolving frame.
Fig. 6 is a perspective view illustrating a state in which the support member, a partition plate, and the like are mounted on the revolving frame.
Fig. 7 is a perspective view illustrating a vertical partition plate.
Fig. 8 is a perspective view illustrating a lateral partition plate.
Fig. 9 is a perspective view illustrating a motor-pump support plate.
Fig. 10 is a perspective view illustrating an inverter support plate.
Fig. 11 is a perspective view illustrating a lower plate.
Fig. 12 is a perspective view illustrating a state in which the partition plate, an electric motor, an inverter, and the like are mounted on the revolving frame.
Fig. 13 is a front view illustrating as a single unit the electric motor including a motor case and the like.
Fig. 14 is a plan view illustrating as a single unit the inverter including an inverter case and the like.
Fig. 15 is a circulation route diagram illustrating circulation routes of cooling water cooled by a radiator and hydraulic oil cooled by an oil cooler.
Fig. 16 is a perspective view illustrating a state in which the partition plate, the electric motor, the inverter, a cooling fan, a heat exchanger, an oil tank, and the like are mounted on the revolving frame.
Fig. 17 is a perspective view illustrating a single battery unit.
Fig. 18 is a perspective view of an exterior cover taken from a right forward direction.
Fig. 19 is a perspective view of the exterior cover taken from a left forward direction.

### MODE FOR CARRYING OUT THE INVENTION

Hereafter, a construction machine according to an embodiment of the present invention will be explained in greater detail with reference to the accompanying drawings, by citing a hydraulic excavator as an example.

In the drawings, designated at 1 is an electrical hydraulic excavator, and this hydraulic excavator 1 is constituted by a crawler type automotive lower traveling structure 2 and an upper revolving structure 3 which is swingably mounted on the lower traveling structure 2 and constitutes a vehicle body together with the lower traveling structure 2. A swing type working mechanism 4 for performing such as the operation of excavating earth and sand is provided on a front side of the upper revolving structure 3. The working mechanism 4 is constituted by a boom 4A, an arm 4B, a bucket 4C, a boom cylinder 4D, an arm cylinder 4E, a bucket cylinder 4F, and the like.

The hydraulic excavator 1 has a hydraulic pump 17, an electric motor 18, and the like which will be described below and serve as a driving source. The hydraulic excavator 1 supplies hydraulic pressure oil from the hydraulic pump 17 toward such hydraulic equipment as a hydraulic motor for traveling, a hydraulic motor for revolving (neither is shown), and the respective cylinders 4D, 4E, and 4F for constituting the working mechanism 4 by driving the hydraulic pump 17 by the electric motor 18.

The upper revolving structure 3 effects a revolving operation on the lower traveling structure 2 with a revolving center P as a center and is constituted by a revolving frame 5, a partition plate 7, an operator's seat 15, a canopy 16, the hydraulic pump 17, the electric motor 18, an inverter 19, an oil tank 20, a heat exchanger 21, a cooling fan 30, a battery 31, an exterior cover 34, and the like which will be described hereinafter.

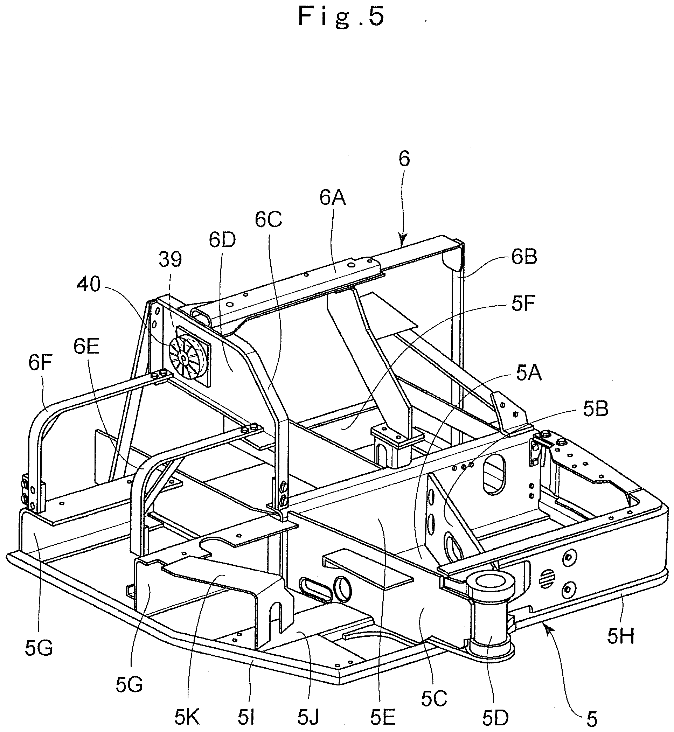

Designated at 5 is the revolving frame serving as a vehicle body frame which is a base of the upper revolving structure 3, and the revolving frame 5 is formed as a rigid supporting structure, as shown in Fig. 5.

The revolving frame 5 includes a bottom plate 5A in the form of a thick flat plate provided in its central portion as viewed in the left-right direction in such a manner as to extend in the front-rear direction; a left vertical plate 5B and a right vertical plate 5C erected on an upper surface side of the bottom plate 5A at an interval therebetween and extending in the front-rear direction; a support bracket 5D provided at front end portions of these vertical plates 5B and 5C; a lateral plate 5E erected on the bottom plate 5A in such a manner as to traverse the left and right vertical plates 5B and 5C at an intermediate portion in the front-rear direction; a left extension beam 5F extending laterally leftward from a rear end side of the left vertical plate 5B; and two right extension beams 5G extending laterally rightward from the right vertical plate 5C at an interval therebetween in the front-rear direction.

Further, the revolving frame 5 includes an L-shaped left frame member 5H which is connected to the left vertical plate 5B in the vicinity of the support bracket 5D and is connected to left end portions of the lateral plate 5E and the left extension beam 5F; a right frame member 51 which is disposed on the right side of the bottom plate 5A and which is connected to right end portions of the right extension beams 5G and is connected to a front side of the bottom plate 5A; a front connecting member 5J in the form of a thick flat plate for connecting front sides of the right vertical plate 5C and the right frame member 51; and a heat exchanger support plate 5K which is formed of a plate bent in the form of an inverse L-shape in a side view and is fixed to an upper end of the front side right extension beam 5G and to the front connecting member 5J in such a manner as to bridge them.

Here, the arrangement provided is such that the working mechanism 4 is mounted swingably in the left-right direction on the support bracket 5D located on the front end side of the revolving frame 5, and the below-described battery 31 is mounted on the rear end side of the revolving frame 5.

Denoted at 6 is a support member erected on an intermediate portion in the front-rear direction of the revolving frame 5, and the support member 6 supports the partition plate 7, the canopy 16, the hydraulic pump 17, the electric motor 18, the inverter 19, and the like which will be described hereinafter. Here, the support member 6 is largely constituted by a lateral beam 6A extending in the left-right direction above the bottom plate 5A; a rod-like left vertical beam 6B extending downwardly from a left end portion of the lateral beam 6A; a right vertical beam 6C constituted by an inverse U-shaped frame body and extending downwardly from a right end portion of the lateral beam 6A; a below-described plate body 6D; and support plate mounting brackets 6E and 6F. In this case, as for the support member 6, a front end portion of the right vertical beam 6C is fixed to a right end portion of the lateral plate 5E of the revolving frame 5, and a rear end portion of the right vertical beam 6C is fixed to the right vertical plate 5C of the revolving frame 5.

Meanwhile, the support member 6 has the plate body 6D having a trapezoidal shape and located in a range from an upper end portion of the right vertical beam 6C to an intermediate portion thereof in the vertical direction. The plate body 6D is fixed to the right vertical beam 6C and constitutes a part of a below-described vertical partition plate 8. A communicating hole 39 and an auxiliary fan 40 are arranged to be provided in this plate body 6D. Further, the support member 6 has the two support plate mounting brackets 6E and 6F which extend in the left-right direction while being bent in an L-shape and are spaced apart from each other in the front-rear direction. Left upper end portions of these front and rear support plate mounting brackets 6E and 6F are fixed to a lower end side of the plate body 6D on the right vertical beam 6C, and right lower end portions thereof are respectively fixed to the front and rear right extension beams 6G for making up the revolving frame 5.

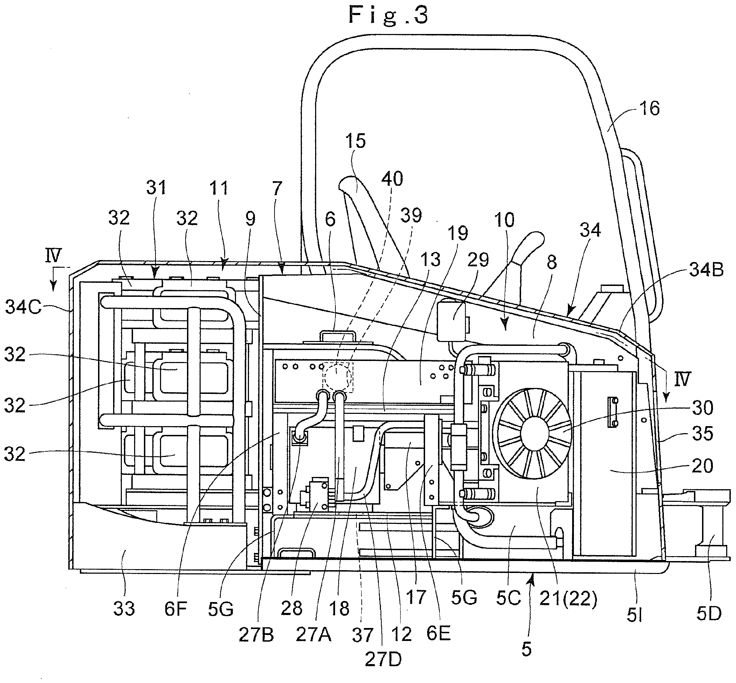

Next, designated at 7 is the partition plate provided on the revolving frame 5, and the partition plate 7 partitions the interior of the below-described exterior cover 34 into a machine room 10 and a battery room 11, as shown in Figs. 3, 4, and 6. Here, the partition plate 7 is constituted by the vertical partition plate 8 which is erected on the left vertical plate 5B of the revolving frame 5 and extends in the front-rear direction along the left vertical plate 5B and by a lateral partition plate 9 which extends in the left-right direction between a rear end portion of the vertical partition plate 8 and a rear end portion of the right frame member 51 of the revolving frame 5.

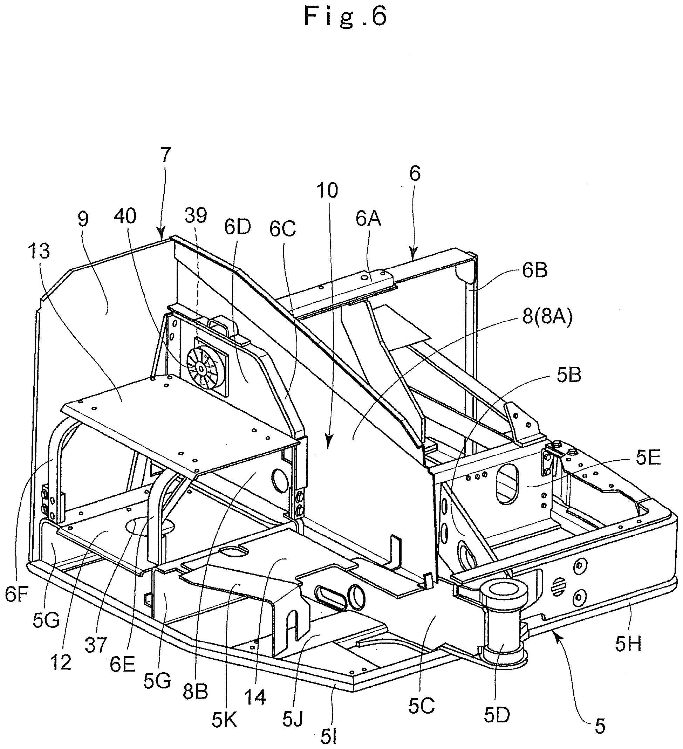

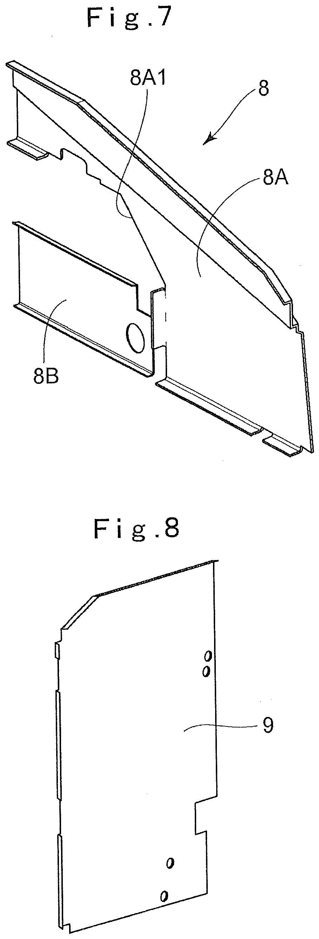

As shown in Figs. 6 and 7, the vertical partition plate 8 is constituted by an upper vertical partition plate 8A extending in the front-rear direction in a range from a front end side of the right vertical plate 5C for constituting the revolving frame 5 to a rear end portion of the right vertical beam 6C for constituting the support member 6 and by a substantially rectangular lower vertical partition plate 8B arranged on a lower side of a rear portion of the upper vertical partition plate 8A. A trapezoidal notched portion 8A1 corresponding to the right vertical beam 6C of the support member 6 is formed at a rear end side of the upper vertical partition plate 8A. The arrangement provided is such that in a state in which the upper vertical partition plate 8A is disposed on the right vertical plate 5C of the revolving frame 5, the notched portion 8A1 is engaged with an outer periphery of the right vertical beam 6C of the support member 6 without a clearance.

In this instance, since the plate body 6D is fixed in the range from the upper end portion of the right vertical beam 6C to the intermediate portion thereof in the vertical direction, the plate body 6D is disposed in a substantially identical plane to that of the upper vertical partition plate 8A in the state in which the notched portion 8A1 of the upper vertical partition plate 8A is engaged with the right vertical beam 6C. In this state, as the lower vertical partition plate 8B is disposed on the lower side of the rear portion of the upper vertical partition plate 8A, the upper vertical partition plate 8A, the plate body 6D of the right vertical beam 6C, and the lower vertical partition plate 8B are arranged to form an identical plate extending in the front-rear direction. Thus, in this embodiment, the plate body 6D which is provided on the right vertical beam 6C of the support member 6 constitutes a part of the vertical partition plate 8.

Meanwhile, the lateral partition plate 9 is formed by a rectangular flat plate which extends vertically and in parallel in the left-right direction with the support plate mounting bracket 6F of the support member 6. As for this lateral partition plate 9, its one end side is mounted on a rear end portion of the right vertical beam 6C for constituting the support member 6 and juts out laterally rightward from the rear end portion of the vertical partition plate 8, and its other end side extends to a rear end portion of the right frame member 51 for constituting the revolving frame 5.

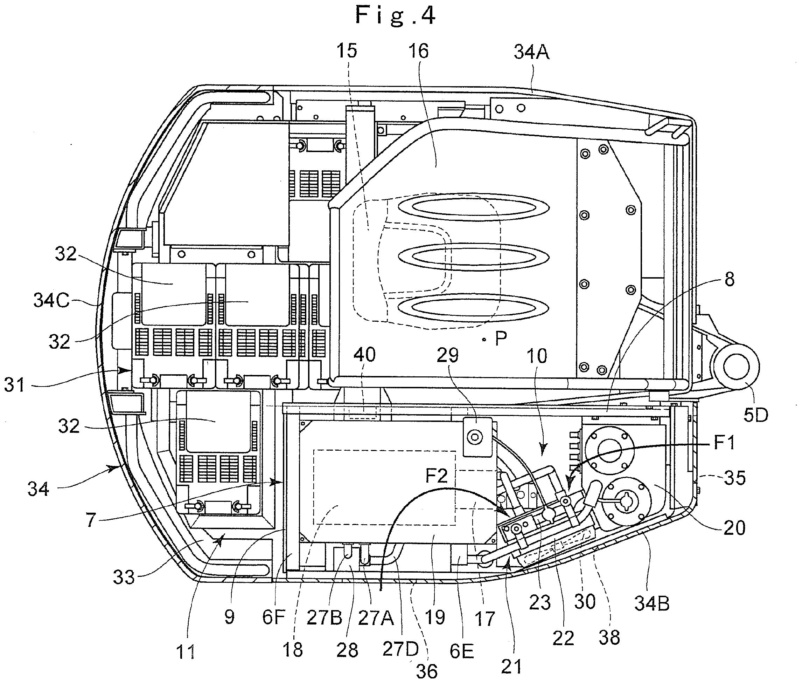

Thus, the partition plate 7 is arranged in an L-shape as viewed from above by means of the vertical partition plate 8 and the lateral partition plate 9. Namely, as shown in Fig. 4, the partition plate 7 is arranged to partition the interior of the exterior cover 34 into the machine room 10, which is located on the right side of the below-described operator's seat 15 and accommodates the hydraulic pump 17, the electric motor 18, the inverter 19, the oil tank 20, the heat exchanger 21, the cooling fan 30, and the like, which will be described hereinafter, and into the battery room 11, which is located on the rear side of the operator's seat 15 and accommodates the below-described battery 31.

Next, indicated at 12 is a motor-pump support plate provided in the form of a flat plate and located between the two right extension beams 5G located on the front and rear sides of the revolving frame 5. The motor-pump support plate 12 supports the hydraulic pump 17 and the electric motor 18. As shown in Figs . 6 and 9, the motor-pump support plate 12 is formed of a rectangular flat plate by using a steel plate or the like, and both its ends in the front-rear direction are respectively fixed to the right extension beams 5G. In addition, a below-described motor-pump cooling air inlet port 37 is formed in a central portion of the motor-pump support plate 12.

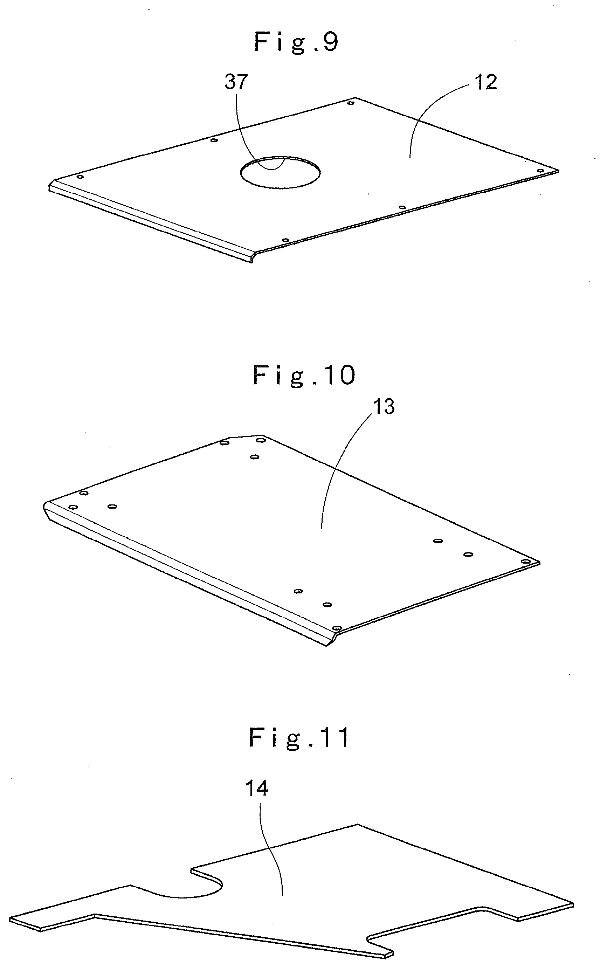

Indicated at 13 is an inverter support plate provided on upper end sides of the front and rear support plate mounting brackets 6E and 6F of the support member 6 and located above the motor-pump support plate 12. The inverter support plate 13 supports the below-described inverter 19. As shown in Figs. 6 and 10, the inverter support plate 13 is formed as a rectangular flat plate by using a steel plate or the like, and both its ends in the front-rear direction are respectively fixed to the front and rear support plate mounting brackets 6E and 6F.

Indicated at 14 is a lower plate provided among the right vertical plate 5C, the front side right extension beam 5G, and the heat exchanger support plate 5K of the revolving frame 5. As shown in Figs. 6 and 11, this lower plate 14 is formed as a substantially trapezoidal flat plate by using a steel plate or the like, and is fixed between the right vertical plate 5C and the front side right extension beam 5G in a state in which an identical plane is formed with the motor-pump support plate 12 and the heat exchanger support plate 5K of the revolving frame 5. Further, the lower plate 14 restrains the cooling air introduced into the machine room 10 by the below-described cooling fan 30 from flowing around to the lower side of the below-described heat exchanger 21 disposed on the heat exchanger support plate 5K.

Indicated at 15 is the operator's seat provided on the revolving frame 5, and the operator's seat 15 is arranged leftwardly of the revolving center P of the upper revolving structure 3 (see Fig. 4). This operator's seat 15 is for an operator who operates the hydraulic excavator 1 to be seated thereon, and the operator's seat 15 is covered from above by the 4-post type canopy 16 which is supported by the support member 6.

Next, a description will be given of the hydraulic pump 17, the electric motor 18, the inverter 19, the oil tank 20, the heat exchanger 21, and the cooling fan 30 which are arranged in the machine room 10 partitioned by the partition plate 7, as well as the battery 31 provided in the battery room 11.

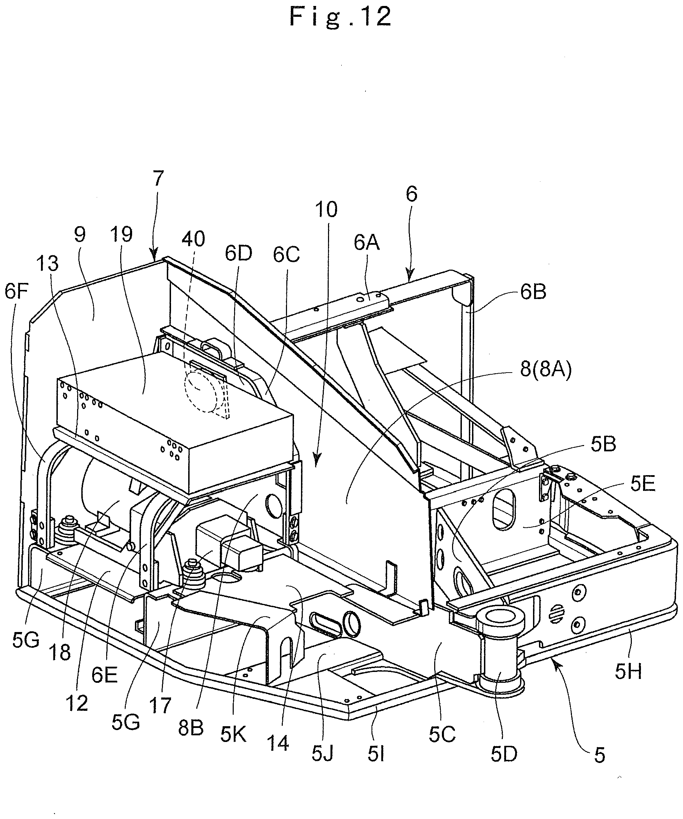

Indicated at 17 is the hydraulic pump provided on a rear side of the machine room 10 by being located on the right side of the operator's seat 15. As shown in Figs. 3 and 12, the hydraulic pump 17 is mounted on the motor-pump support plate 12 together with the below-described electric motor 18. As the hydraulic pump 17 is driven by the electric motor 18, the hydraulic pump 17 discharges hydraulic pressure oil (hydraulic oil) toward various items of hydraulic equipment mounted on the hydraulic excavator 1.

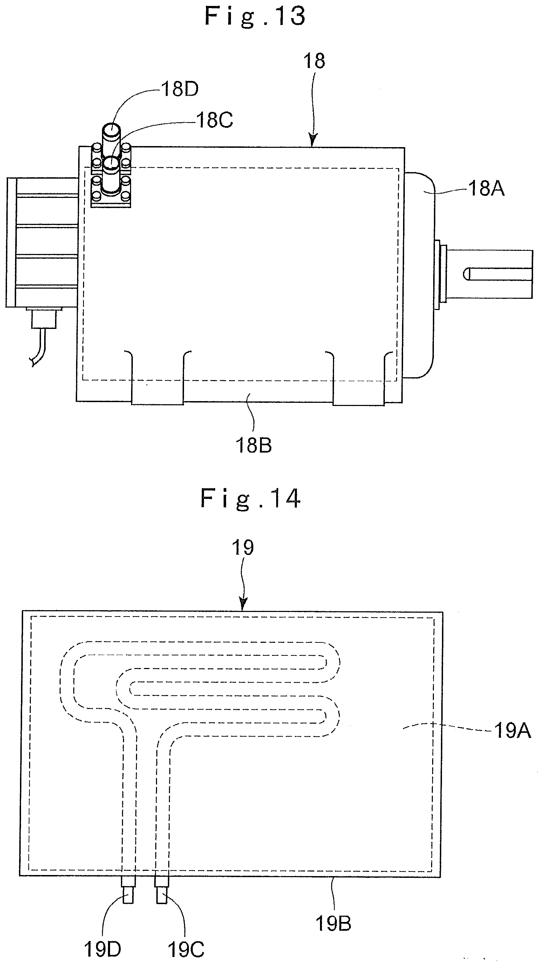

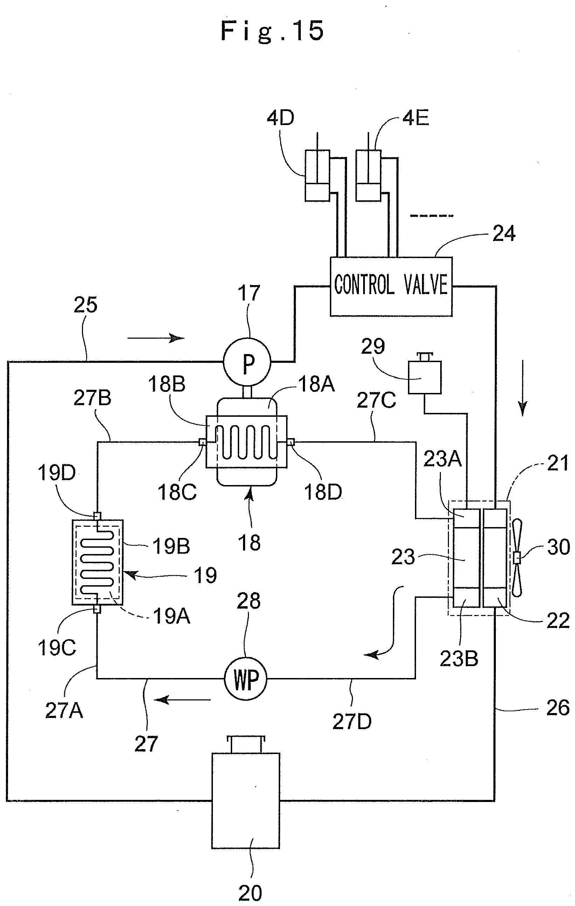

Indicated at 18 is the electric motor mounted on the motor-pump support plate 12 with the hydraulic pump 17. As electric power is fed from the below-described battery 31 to the electric motor 18, the electric motor 18 drives the hydraulic pump 17. As shown in Figs. 13 and 15, the electric motor 18 is constituted by a motor body 18A and a motor case 18B covering the motor body 18A. The motor case 18B is provided with a water jacket (not shown) through which cooling water circulates, and a cooling water inlet port 18C and a cooling water outlet port 18D which communicate with the water jacket are projectingly provided on the motor case 18B.

Indicated at 19 is the inverter provided on the inverter support plate 13 by being located on the upper side of the electric motor 18 and the hydraulic pump 17. The inverter 19 controls a drive voltage which is supplied from the below-described battery 31 to the electric motor 18. As shown in Figs. 14 and 15, the inverter 19 is constituted by an inverter circuit 19A and an inverter case 19B for accommodating the inverter circuit 19A. The inverter case 19B is provided with a water jacket (not shown) through which the cooling water circulates, and a cooling water inlet port 19C and a cooling water outlet port 19D which communicate with the water jacket are projectingly provided on the inverter case 19B. Further, the cooling water inlet port 19C of the inverter case 19B is connected to a discharge side of a below-described cooling water pump 28, and the cooling water outlet port is connected to the cooling water inlet port 18C of the electric motor 18.

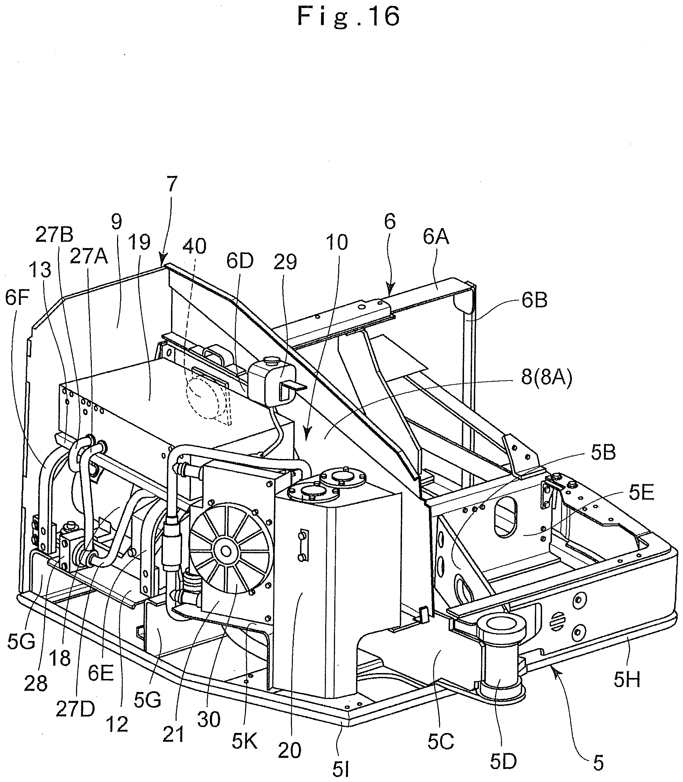

Indicated at 20 is the oil tank provided on a front side of the machine room 10, and as shown in Fig. 16, the oil tank 20 is constituted by a box body of a rectangular parallelepiped extending vertically. This oil tank 20 is for storing hydraulic oil which is supplied to the hydraulic equipment mounted on the hydraulic excavator 1.

Designated at 21 is the heat exchanger provided in the machine room 10. The heat exchanger 21 is mounted on the heat exchanger support plate 5K of the revolving frame 5 and is disposed forwardly of the electric motor 18 and the hydraulic pump 17 and rearwardly of the oil tank 20. As shown in Fig. 15, the heat exchanger 21 is constituted by an oil cooler 22 for cooling the hydraulic oil (return oil) which returns from the various hydraulic equipments mounted on the hydraulic excavator 1 to the oil tank 20 and by a radiator 23 for cooling the cooling water which is supplied to the motor case 18B of the electric motor 18 and the inverter case 19B of the inverter 19.

Here, if consideration is given to a control valve 24 for supplying the hydraulic oil to the hydraulic equipment such as the boom cylinder 4D, the arm cylinder 4E, the inlet side of the control valve 24 is a hydraulic oil intake passage 25 connected to the oil tank 20 via the hydraulic pump 17, and outlet side of the control valve 24 is a hydraulic oil discharge passage 26 connected to the oil tank 20 via the oil cooler 22. Accordingly, the oil cooler 22 is provided on the downstream side of the control valve 24 midway in the hydraulic oil discharge passage 26. In consequence, the oil cooler 22 causes the heat of the hydraulic oil heated by the various hydraulic equipments to be radiated to the cooling air made to flow in the machine room 10 by the cooling fan 30, to thereby recirculate the cooled hydraulic oil to the oil tank 20.

Meanwhile, the radiator 23 is located on the downstream side of the oil cooler 22 in the direction of flow of the cooling air caused by the cooling fan 30, and is provided midway in a cooling water passage 27 allowing the motor case 18B of the electric motor 18 and the inverter case 19B of the inverter 19 to communicate with each other. In this instance, the cooling water passage 27 is constituted by a hose 27A connecting the discharge side of the cooling water pump 28 and the cooling water inlet port 19C of the inverter 19, a hose 27B connecting the cooling water outlet port 19D of the inverter case 19B and the cooling water inlet port 18C of the motor case 18B, a hose 27C connecting the cooling water outlet port 18D of the motor case 18B and an upper tank 23A of the radiator 23, and a hose 27D connecting a lower tank 23B of the radiator 23 and the return side of the cooling water pump 28. Here, the cooling water pump 28 is mounted on the motor-pump support plate 12 together with the electric motor 18 and the hydraulic pump 17 (see Fig. 16) .

In consequence, the cooling water passage 27 forms a circulation passage of cooling water which circulates through the cooling water pump 28, the inverter case 19B, the motor case 18B, and the radiator 23. The arrangement provided is such that the heat of the cooling water heated by the electric motor 18 and the inverter 19 is radiated to cooling air while the cooling water flows from the upper tank 23A to the lower tank 23B of the radiator 23. Meanwhile, a reservoir tank 29 for storing cooling water for replenishment is connected to the upper tank 23A of the radiator 23 so that a fixed quantity of cooling water is constantly circulated in the cooling water passage 27.

Designated at 30 is the cooling fan of a blow-out type provided in the machine room 10 in a state of being opposed to the heat exchanger 21. This cooling fan 30 is constituted by an electric fan which is driven by electric power fed from the below-described battery 31, and is arranged forwardly of the electric motor 18 and the hydraulic pump 17 and rearwardly of the oil tank 20.

Further, as the cooling fan 30 rotates, outside air is sucked into the machine room 10 through such as an oil tank cooling air inlet port 35, an inverter cooling air inlet port 36, and a motor-pump cooling air inlet port 37, which are provided in the exterior cover 34 and will be described hereinafter. This outside air is circulated inside the machine room 10 as cooling air, and is subsequently exhausted to the outside through a below-described exhaust port 38.

Denoted at 31 is the battery disposed in the battery room 11 by being located rearwardly of the operator's seat 15, and the battery 31 feeds electric power to such as the electric motor 18, and the cooling fan 30. As shown in Figs. 3 and 4, the battery 31 is constituted by an assembly of a multiplicity of electrically connected single battery units 32, and the battery 31 is disposed in a state of being stacked on a battery support base 33 fixed to a rear end portion of the revolving frame 5.

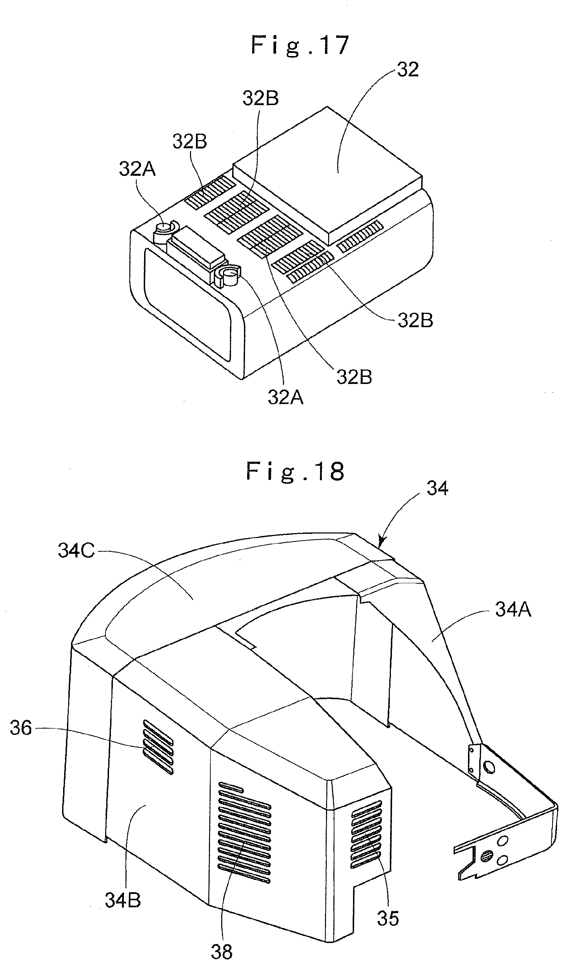

As shown in Fig. 17, the single battery unit 32 has the shape of a rectangular parallelepiped extending in the left-right direction and has a pair of terminals 32A provided on its upper surface side. In addition, the single battery unit 32 is provided with ventilation holes 32B which penetrate vertically, the arrangement being such that it is possible to restrain heat from being built up among the stacked single battery units 32.

Next, a description will be given of the exterior cover 34, the inlet ports 35 and 36 provided in the exterior cover 34, the exhaust port 38 similarly provided in the exterior cover 34, and the inlet port 37 provided in the motor-pump support plate 12.

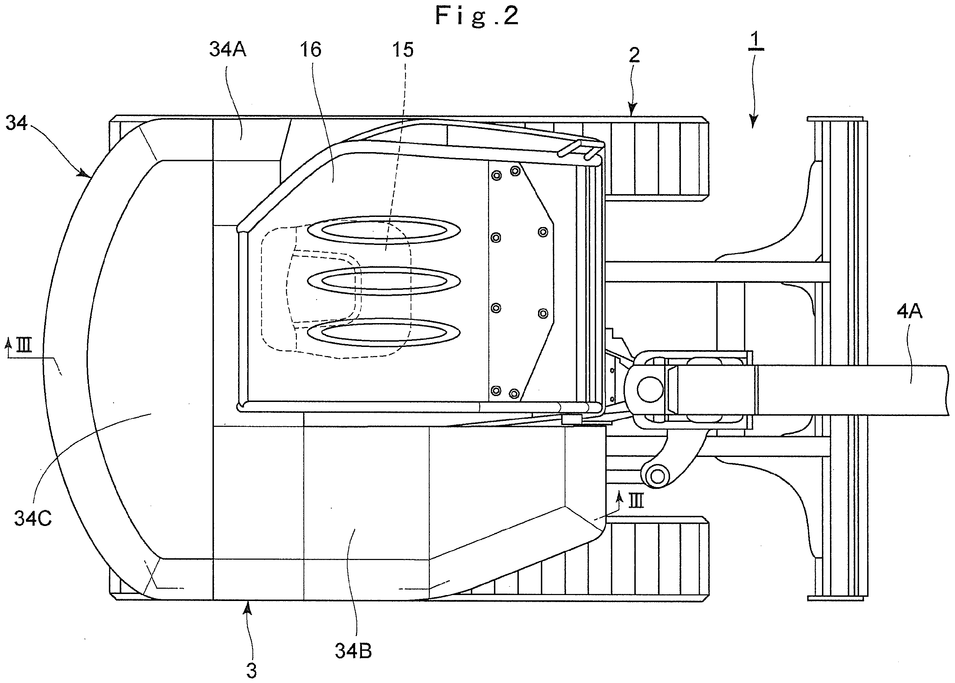

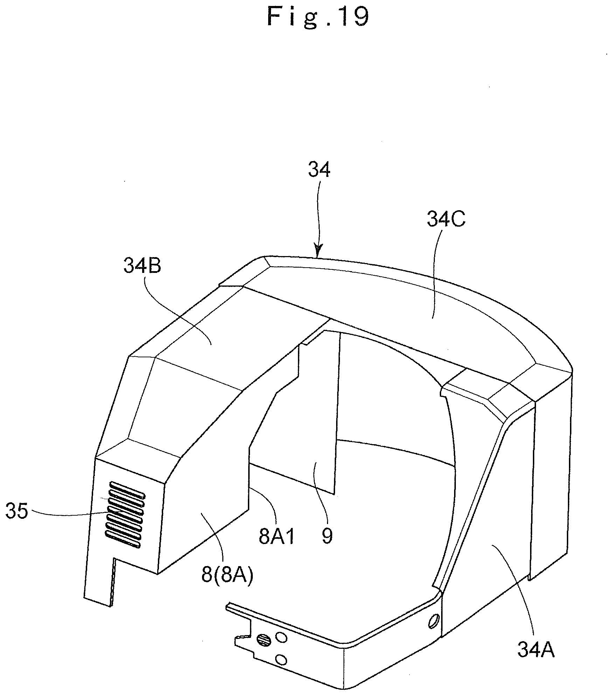

Namely, designated at 34 is the exterior cover which is provided in such a manner as to cover the hydraulic pump 17, the electric motor 18, the inverter 19, the oil tank 20, the heat exchanger 21, and the cooling fan 30 which are arranged in the machine room 10 and the battery 31 arranged in the battery room 11. As shown in Figs. 2, 3, 18, and 19, the exterior cover 34 is constituted by a left cover 34A arranged on the left side of the operator's seat 15, a right cover 34B arranged on the right side of the operator's seat 15 to cover the machine room 10, and a rear cover 34C arranged on the rear side of the operator's seat 15 to cover the battery 31.

In consequence, the interior of the exterior cover 34 can be partitioned into the machine room 10 surrounded by the partition plate 7 provided on the revolving frame 5 and by the right cover 34B and into the battery room 11 surrounded by the partition plate 7 and the rear cover 34C. The arrangement provided is such that the heat generated from such as the hydraulic pump 17 and the electric motor 18 arranged in the machine room 10 can be restrained from being transmitted to the battery 31.

Indicated at 35 is the oil tank cooling air inlet port provided in the exterior cover 34 in face-to-face relation to the oil tank 20, and the oil tank cooling air inlet port 35 is provided in a front surface of the right cover 34B of the exterior cover 34. Here, as the cooling fan 30 rotates, the oil tank cooling air inlet port 35 allows the outside air to be sucked into the machine room 10 past the oil tank 20.

Indicated at 36 is the inverter cooling air inlet port provided in the exterior cover 34 in face-to-face relation to the inverter 19, and the inverter cooling air inlet port 36 is provided in a right side surface of the right cover 34B of the exterior cover 34. Here, as the cooling fan 30 rotates, the inverter cooling air inlet port 36 allows the outside air to be sucked into the machine room 10 past the inverter 19.

Indicated at 37 is the motor-pump cooling air inlet port provided in the motor-pump support plate 12, and the motor-pump cooling air inlet port 37 is provided on the lower side of the electric motor 18. Here, as the cooling fan 30 rotates, the motor-pump cooling air inlet port 37 allows the outside air to be sucked into the machine room 10 past the electric motor 18 and the hydraulic pump 17.

Indicated at 38 is the exhaust port provided in the exterior cover 34 in face-to-face relation to the cooling fan 30. This exhaust port 38 is provided in a right side surface of the right cover 34B of the exterior cover 34 to exhaust to the outside the outside air (cooling air) introduced into the machine room 10 by the cooling fan 30. Accordingly, when the cooling fan 30 is operated, the outside air is introduced into the machine room 10 through such as the oil tank cooling air inlet port 35, the inverter cooling air inlet port 36, and the motor-pump cooling air inlet port 37. This outside air serving as cooling air cools the hydraulic pump 17, the electric motor 18, the inverter 19, the oil tank 20, the heat exchanger 21, and the like inside the machine room 10, and is then exhausted to the outside of the machine room 10 through the exhaust port 38.

In this instance, as shown in Fig. 4, since the cooling fan 30 is arranged forwardly of the electric motor 18 and the hydraulic pump 17 and rearwardly of the oil tank 20, the cooling air which is circulated in the machine room 10 by the cooling fan 30 can be divided into a first cooling air route in which the cooling air flows in from the oil tank cooling air inlet port 35 and which is indicated at arrow F1 and into a second cooling air route in which the cooling air flows in from the inverter cooling air inlet port 36 and the motor-pump cooling air inlet port 37 and which is indicated at arrow F2. Accordingly, the arrangement provided is such that the oil tank 20 can be cooled efficiently by the cooling air flowing along the first cooling air route F1, and the hydraulic pump 17, the electric motor 18, and the inverter 19 can be cooled efficiently by the cooling air flowing along the second cooling air route F2.

Meanwhile, indicated at 39 is the communicating hole provided in the plate body 6D of the support member 6 constituting a part of the vertical partition plate 8, and the communicating hole 39 allows the machine room 10 and the battery room 11 partitioned by the partition plate 7 to communicate with each other. In this instance, as the cooling fan 30 rotates, the flow of cooling air which is directed to the exhaust port 38 along the first cooling air route F1 and the second cooing air route F2 is formed inside the machine room 10. Accordingly, the arrangement provided is such that the air inside the battery room 11 can be introduced into the machine room 10 through the communicating hole 39 by making use of these cooling air routes F1 and F2, thereby making it possible to restrain the air inside the machine room 10, which is heated by such as the hydraulic pump 17 and the electric motor 18, from flowing into the battery room 11.

Indicated at 40 is the auxiliary fan provided in the plate body 6D of the support member 6 constituting a part of the vertical partition plate 8, and the auxiliary fan 40 is constituted by an electric fan which is driven by electric power fed from the battery 31. This auxiliary fan 40 forcibly leads the air inside the battery room 11 into the machine room 10 through the communicating hole 39, to thereby reliably restrain the heated air inside the machine room 10 from flowing into the battery room 11.

The hydraulic excavator 1 in accordance with this embodiment has the construction described above, and when performing, for instance, an operation of excavating earth and sand by using the hydraulic excavator 1, the electric motor 18 is first operated to drive the hydraulic pump 17.

In this state, as an operator who is seated on the operator's seat 15 operates a traveling lever/pedal (not shown), the lower traveling structure 2 is made to propel itself to move the hydraulic excavator 1 to a work site. After the hydraulic excavator 1 has moved to the work site, as the operator manipulates an operation lever (not shown), the operation of excavating such as earth and sand can be performed by the working mechanism 4 by revolving the upper revolving structure 3.

Here, when the hydraulic excavator 1 is operating, as the electric cooling fan 30 is driven, outside air is introduced into the machine room 10 through such as the oil tank cooling air inlet port 35, the inverter cooling air inlet port 36, and the motor-pump cooling air inlet port 37. This outside air serving as cooling air cools the hydraulic pump 17, the electric motor 18, the inverter 19, the oil tank 20, the heat exchanger 21, and the like inside the machine room 10, and is then exhausted to the outside of the machine room 10 through the exhaust port 38.

Thus, as the interior of the exterior cover 34 is partitioned into the machine room 10 and the battery room 11 by the partition plate 7, the heat generated from the mounted equipment such as the hydraulic pump 17 and the electric motor 18 arranged in the machine room 10 can be restrained from being transmitted to the battery 31 arranged in the battery room 11, thereby making it possible to constantly maintain the surroundings of the battery 31 at an appropriate temperature. As a result, the feeding of electric power from the battery 31 to the electric motor 18 and the like can be effected stably over a long period of time, making it possible to enhance the reliability of the hydraulic excavator 1.

In addition, when the hydraulic excavator 1 is operated, the auxiliary fan 40 provided in the plate body 6D of the support member 6 is also driven by the feeding of electric power from the battery 31, so that the air inside the battery room 11 can be forcibly led into the machine room 10 through the communicating hole 39. As a result, the heated air inside the machine room 10 can be reliably restrained from flowing into the battery room 11. Further, in cases where the battery 31 itself has generated heat, the air inside the battery room 11 heated by this generated heat can be forcibly exhausted to the machine room 10, so that the surroundings of the battery 31 can be maintained at an appropriate temperature, thereby making it possible to prolong the life of the battery 31.

Meanwhile, since the cooling fan 30 is arranged between the electric motor 18 and the hydraulic pump 17, on the one hand, and the oil tank 20, on the other hand, inside the machine room 10, the cooling air which is circulated in the machine room 10 by the cooling fan 30 can be divided into the first cooling air route indicated at arrow F1 in Fig. 4 and into the second cooling air route indicated at arrow F2.

Accordingly, the cooling air flowing along the first cooling air route F1 is not heated by the heat from such as the hydraulic pump 17 and the electric motor 18, so that the oil tank 20 can be efficiently cooled by the cooling air flowing along the first cooling air route F1. Meanwhile, the cooling air flowing along the second cooling air route F2 is not heated by the heat from the oil tank 20, so that the hydraulic pump 17, the electric motor 18, and the inverter 19 can be efficiently cooled by the cooling air flowing along the second cooling air route F2.

Further, since both the cooling air flowing along the first cooling air route F1 and the cooling air flowing along the second cooling air route F2 are exhausted to the outside past the heat exchanger 21, it is possible to supply a large quantity of cooling air to the oil cooler 22 and the radiator 23 constituting the heat exchanger 21. In consequence, the heat of the heated hydraulic oil (return oil) which recirculates to the oil tank 20 can be cooled by the oil cooler 22. Hence, the heat of the cooling water which is supplied to the water jackets of the motor case 18B of the electric motor 18 and the inverter case 19B of the inverter 19 can be cooled by the radiator 23.

Thus, as the oil tank 20 is cooled from the outside by the outside air which is introduced into the machine room 10 from the oil tank cooling air inlet port 35, and the heated hydraulic oil which flows into the oil tank 20 is cooled by the oil cooler 22, it is possible to cool the oil tank 20 more efficiently.

In addition, the inverter 19 is cooled from the outside by the outside air introduced into the machine room 10 from the inverter cooling air inlet port 36, the electric motor 18 and the hydraulic pump 17 are cooled from the outside by the outside air introduced into the machine room 10 from the motor-pump cooling air inlet port 37, and the cooling water which is supplied to the water jackets of the motor case 18B of the electric motor 18 and the inverter case 19B of the inverter 19 is cooled by the radiator 23, thereby making it possible to cool the hydraulic pump 17, the electric motor 18, and the inverter 19 more efficiently.

It should be noted that, in the above-described embodiment, the case is illustrated in which the right vertical beam 6C of the support member 6 is engaged with the notched portion 8A1 of the vertical partition plate 8 (upper vertical partition plate 8A), and the plate body 6D mounted on this right vertical beam 6C constitutes a part of the vertical partition plate 8. However, the present invention is not limited to the same, and the plate body 6D of the support member 6 may be disused by using a vertical partition plate which is not provided with a notched portion.

In the above-described embodiment, the canopy type hydraulic excavator 1 is illustrated which is equipped with the canopy 16 for covering the upper side of the operator's seat 15. However, the present invention is not limited to the same, and is also applicable to a cab type hydraulic excavator which is equipped with a cab enclosing the surroundings of the operator's seat 15.

Further, in the above-described embodiment, the hydraulic excavator 1 is illustrated as an electrical construction machine. However, the present invention is not limited to the same, and is also widely applicable to other construction machines such as a wheel loader, a hydraulic crane, a dump truck, and the like.

### DESCRIPTION OF REFERENCE NUMERALS

- 1:: Hydraulic excavator (Construction machine)
- 2:: Lower traveling structure (Vehicle body)
- 3:: Upper revolving structure (Vehicle body)
- 5:: Revolving frame (Vehicle body frame)
- 7:: Partition plate
- 8:: Vertical partition plate
- 9:: Lateral partition plate
- 10:: Machine room
- 11:: Battery room
- 12:: Motor-pump support plate
- 13:: Inverter support plate
- 15:: Operator's seat
- 17:: Hydraulic pump
- 18:: Electric motor
- 18B:: Motor case
- 19:: Inverter
- 19B:: Inverter case
- 20:: Oil tank
- 21:: Heat exchanger
- 22:: Oil cooler
- 23:: Radiator
- 30:: Cooling fan
- 31:: Battery
- 34:: Exterior cover
- 35:: Oil tank cooling air inlet port
- 36:: Inverter cooling air inlet port
- 37:: Motor-pump cooling air inlet port
- 38:: Exhaust port
- 39:: Communicating hole
- 40:: Auxiliary fan

## Claims

1. An electrical construction machine including: a vehicle body frame (5) which constitutes a support structure of a vehicle body and which has a working mechanism (4) mounted on a front side in a front-rear direction; an operator's seat (15) provided on said vehicle body frame (5) on a left side in a left-right direction; a hydraulic pump (17) provided on a right side of said operator's seat (15) to supply hydraulic oil to said working mechanism (4) ; an electric motor (18) for driving said hydraulic pump (17); an inverter (19) for controlling a drive voltage of said electric motor (18); an oil tank (20) for storing the hydraulic oil which is supplied to said working mechanism (4); a heat exchanger (21) for cooling a heated fluid; a battery (31) provided on a rear side of said operator's seat (15) to effect the feeding of electric power to said electric motor (18); and an exterior cover (34) provided in such a manner as to cover said hydraulic pump (17), said electric motor (18), said inverter (19), said oil tank (20), said heat exchanger (21), and said battery (31), wherein said vehicle body frame (5) is provided with a partition plate (7) for partitioning an interior of said exterior cover (34) into a machine room (10) for accommodating said hydraulic pump (17), said electric motor (18), said inverter (19), said oil tank (20), and said heat exchanger (21) and into a battery room (11) for accommodating said battery (31),
a cooling fan (30) for circulating cooling air inside said machine room (10) is provided in said machine room (10),
said oil tank (20) is arranged on a front side of said machine room (10), said electric motor (18) and said hydraulic pump (17) are arranged on a rear side of said machine room (10), said inverter (19) is arranged upwardly of said electric motor (18) and said hydraulic pump (17), and said cooling fan (30) and said heat exchanger (21) are arranged forwardly of said electric motor (18), said hydraulic pump (17), and said inverter (19) and rearwardly of said oil tank (20),
said cooling fan (30) is constituted by a blow-out type cooling fan which blows air in said machine room (10) to an outside,
said exterior cover (34) is provided with an oil tank cooling air inlet port (35) provided at a position opposing to said oil tank (20) to suck outside air to said oil tank (20), an inverter cooling air inlet port (36) provided at a position opposing to said inverter (19) to suck the outside air to said inverter (19), and an exhaust port (38) provided at a position opposing to said cooling fan (30) to exhaust the air in said machine room (10) by said cooling fan (30), **characterized in that** the cooling air which is circulated in said machine room (10) by said cooling fan (30) is divided into a first cooling air route (F1) in which the cooling air flows in from said oil tank cooling air inlet port (35) for cooling said oil tank (20) and directed to said exhaust port (38) and a second cooling air route (F2) in which the cooling air flows in from said inverter cooling air inlet port (36) for cooling said hydraulic pump (17), said electric motor (18), and said inverter (19) and directed to said exhaust port (38).

2. The electrical construction machine according to claim 1, wherein
a communicating hole (39) for allowing said machine room (10) and said battery room (11) to communicate with each other is provided in said partition plate (7), and
an auxiliary fan (40) for leading the air inside said battery room (11) into said machine room (10) through said communicating hole (39) is provided in said partition plate (7) .

3. The electrical construction machine according to claim 1, wherein
a flat plate-shaped motor-pump support plate (12) for supporting said electric motor (18) and said hydraulic pump (17) is provided on said vehicle body frame (5), and a motor-pump cooling air inlet port (37) for sucking the outside air toward said electric motor (18) and said hydraulic pump (17) is provided in said motor-pump support plate (12).

4. The electrical construction machine according to claim 1, wherein
said electric motor (18) is covered by a motor case (18B) having a water jacket, and said inverter (19) is covered by an inverter case (19B) accommodating an inverter circuit (19A) and having a water jacket, cooling water being arranged to be circulated through said water jackets of said motor case (18B) and said inverter case (19B).

5. An electrical construction machine according to claim 4, wherein
said heat exchanger (21) is constituted by an oil cooler (22) and a radiator (23), said oil cooler (22) being adapted to cool the hydraulic oil which is recirculated into said oil tank (20), said radiator (23) being adapted to cool the cooling water flowing through said water jackets of said motor case (18B) and said inverter case (19B).

6. An electrical construction machine according to claim 1, wherein
said vehicle body is constituted by an automotive lower traveling structure (2) and an upper revolving structure (3) which is swingably mounted on said lower traveling structure (2), and said vehicle body frame (5) constitutes a support structure of said upper revolving structure (3).

## Patentansprüche

1. Elektrische Baumaschine, die Folgendes enthält: einen Fahrzeugkarosserierahmen (5), der eine Tragstruktur einer Fahrzeugkarosserie bildet und an dem an einer Vorderseite ein Arbeitsmechanismus (4) in einer Vorwärts-/Rückwärtsrichtung montiert ist; einen Fahrersitz (15), der an einer linken Seite des Fahrzeugkarosserierahmens (5) in einer Links-/Rechtsrichtung vorgesehen ist; eine Hydraulikpumpe (17), die an einer rechten Seite des Fahrersitzes (15) vorgesehen ist, um den Arbeitsmechanismus (4) mit Hydrauliköl zu versorgen; einen Elektromotor (18), um die Hydraulikpumpe (17) anzutreiben; einen Wechselrichter (19), um eine Antriebsspannung des Elektromotors (18) zu steuern; einen Öltank (20), um das Hydrauliköl, das dem Arbeitsmechanismus (4) zugeführt wird, zu speichern; einen Wärmetauscher (21), um erwärmtes Fluid zu kühlen; eine Batterie (31), die an einer Rückseite des Fahrersitzes (15) vorgesehen ist, um das Zuführen elektrischer Leistung zum Elektromotor (18) zu bewirken; und eine Außenabdeckung (34), die derart vorgesehen ist, dass sie die Hydraulikpumpe (17), den Elektromotor (18), den Wechselrichter (19), den Öltank (20), den Wärmetauscher (21) und die Batterie (31) abdeckt, wobei
der Fahrzeugkarosserierahmen (5) mit einer Trennplatte (7) versehen ist, um einen Innenraum der Außenabdeckung (34) in einen Maschinenraum (10), um die Hydraulikpumpe (17), den Elektromotor (18), den Wechselrichter (19), den Öltank (20) und den Wärmetauscher (21) aufzunehmen, und einen Batterieraum (11), um die Batterie (31) aufzunehmen, zu unterteilen,
ein Kühllüfter (30) im Maschinenraum (10) vorgesehen ist, um Kühlluft im Maschinenraum (10) umzuwälzen,
der Öltank (20) an einer Vorderseite des Maschinenraums (10) angeordnet ist, der Elektromotor (18) und die Hydraulikpumpe (17) an einer Rückseite des Maschinenraums (10) angeordnet sind, der Wechselrichter (19) oberhalb des Elektromotors (18) und der Hydraulikpumpe (17) angeordnet ist und den Kühllüfter (30) und der Wärmetauscher (21) vor dem Elektromotor (18), der Hydraulikpumpe (17) und dem Wechselrichter (19) und hinter dem Öltank (20) angeordnet sind,
der Kühllüfter (30) durch einen Kühllüfter des Ausblastyps gebildet ist, der Luft aus dem Maschinenraum (10) zu einer Außenseite bläst, und
die Außenabdeckung (34) mit einer Öltank-Kühllufteinlassöffnung (35), die bei einer Position, die dem Öltank (20) gegenüberliegt, vorgesehen ist, um Außenluft zum Öltank (20) zu saugen, einer Wechselrichter-Kühllufteinlassöffnung (36), die bei einer Position, die dem Wechselrichter (19) gegenüberliegt, vorgesehen ist, um Außenluft zum Wechselrichter (19) zu saugen, und einer Auslassöffnung (38), die bei einer Position, die dem Kühllüfter (30) gegenüberliegt, vorgesehen ist, um die Luft im Maschinenraum (10) durch den Kühllüfter (30) auszustoßen, versehen ist,
**dadurch gekennzeichnet, dass**
die Kühlluft, die durch den Kühllüfter (30) im Maschinenraum (10) umgewälzt wird, in einen ersten Kühlluftweg (F1), auf dem die Kühlluft von der Öltank-Kühllufteinlassöffnung (35) einströmt, um den Öltank (20) zu kühlen, und zur Auslassöffnung (38) geführt wird, und einen zweiten Kühlluftweg (F2), auf dem die Kühlluft von der Wechselrichter-Kühllufteinlassöffnung (36) einströmt, um die Hydraulikpumpe (17), den Elektromotor (18) und den Wechselrichter (19) zu kühlen, und zur Auslassöffnung (38) geführt wird, unterteilt ist.

2. Elektrische Baumaschine nach Anspruch 1, wobei
eine Kommunikationsöffnung (39) in der Trennplatte (7) vorgesehen ist, um dem Maschinenraum (10) und dem Batterieraum (11) zu ermöglichen, miteinander zu kommunizieren, und
ein Hilfslüfter (40) in der Trennplatte (7) vorgesehen ist, um die Luft aus dem Batterieraum (11) durch die Kommunikationsöffnung (39) in den Maschinenraum (10) zu führen.

3. Elektrische Baumaschine nach Anspruch 1, wobei
eine flache, plattenförmige Motorpumpentragplatte (12) am Fahrzeugkarosserierahmen (5) vorgesehen ist, um den Elektromotor (18) und die Hydraulikpumpe (17) zu tragen, und eine Motorpumpen-Kühllufteinlassöffnung (37) auf der Motorpumpentragplatte (12) vorgesehen ist, um die Außenluft zum Elektromotor (18) und der Hydraulikpumpe (17) zu saugen.

4. Elektrische Baumaschine nach Anspruch 1, wobei
der Elektromotor (18) durch ein Motorgehäuse (18B), das einen Wassermantel besitzt, abgedeckt ist und der Wechselrichter (19) durch ein Wechselrichtergehäuse (19B), das eine Wechselrichterschaltung (19A) aufnimmt und einen Wassermantel besitzt, abgedeckt ist, wobei Kühlwasser ausgelegt ist, durch die Wassermäntel des Motorgehäuses (18B) und des Wechselrichtergehäuses (19B) umgewälzt zu werden.

5. Elektrische Baumaschine nach Anspruch 4, wobei
der Wärmetauscher (21) durch einen Ölkühler (22) und einen Kühler (23) gebildet ist, wobei der Ölkühler (22) ausgelegt ist, das Hydrauliköl, das erneut in den Öltank (20) umgewälzt wird, zu kühlen und der Kühler (23) ausgelegt ist, das Kühlwasser, das durch die Wassermäntel des Motorgehäuses (18B) und des Wechselrichtergehäuses (19B) strömt, zu kühlen.

6. Elektrische Baumaschine nach Anspruch 1, wobei
die Fahrzeugkarosserie durch einen Kraftfahrzeugfahrunterbau (2) und einen Drehaufbau (3), der schwenkbar am Fahrunterbau (2) montiert ist, gebildet ist und der Fahrzeugkarosserierahmen (5) eine Tragstruktur des Drehaufbaus (3) bildet.

## Revendications

1. Machine de chantier électrique incluant : un châssis de corps de véhicule (5) qui constitue une structure de support d'un corps de véhicule et qui comprend un mécanisme de travail (4) monté sur un côté avant dans une direction avant/arrière ; un siège d'opérateur (15) prévu sur ledit châssis de corps de véhicule (9) sur un côté gauche dans une direction gauche/droite ; une pompe hydraulique (17) prévue sur un côté droit dudit siège d'opérateur (15) pour fournir de l'huile hydraulique audit mécanisme de travail (4) ; un moteur électrique (18) pour entraîner ladite pompe hydraulique (17) ; un inverseur (19) pour commander un voltage d'alimentation dudit moteur électrique (18) ; un réservoir d'huile (20) pour stocker l'huile hydraulique qui est fournie audit mécanisme de travail (4) ; un échangeur de chaleur (21) pour refroidir un fluide chauffé ; une batterie (31) prévue sur un côté arrière du siège d'opérateur (15) pour assurer la fourniture d'énergie électrique audit moteur électrique (18) ; et un couvercle extérieur (34) prévu de manière à couvrir ladite pompe hydraulique (17), ledit moteur électrique (18), ledit inverseur (19), ledit réservoir d'huile (20), ledit échangeur de chaleur (21), et ladite batterie (31),
dans laquelle ledit châssis de corps de véhicule (5) est pourvu d'une plaque de cloisonnement (7) pour cloisonner un intérieur dudit couvercle extérieur (34) en un compartiment machine (10) pour loger ladite pompe hydraulique (17), ledit moteur électrique (18), ledit inverseur (19), ledit réservoir d'huile (20), et ledit échangeur de chaleur (21), et en un compartiment batterie (11) pour loger ladite batterie (31),
un ventilateur de refroidissement (30) pour faire circuler de l'air de refroidissement à l'intérieur dudit compartiment machine (10) est prévu dans ledit compartiment machine (10),
ledit réservoir d'huile (20) est agencé sur un côté avant dudit compartiment machine (10), ledit moteur électrique (18) et ladite pompe hydraulique (17) sont agencés sur un côté arrière dudit compartiment machine (10), ledit inverseur (19) est agencé au-dessus dudit moteur électrique (18) et de ladite pompe hydraulique (17), et ledit ventilateur de refroidissement (30) et ledit échangeur de chaleur (21) sont agencés en avant dudit moteur électrique (18), de ladite pompe hydraulique (17), et dudit inverseur (19) et en arrière dudit réservoir d'huile (20),
ledit ventilateur de refroidissement (30) est constitué d'un ventilateur de refroidissement du type extracteur qui souffle l'air dans ledit compartiment machine (10) vers l'extérieur,
ledit couvercle extérieur (34) est doté d'un orifice d'entrée d'air de refroidissement (35) vers le réservoir d'huile prévu à une position à l'opposé dudit réservoir d'huile (20) pour aspirer de l'air extérieur vers ledit réservoir d'huile (20), d'un orifice d'entrée d'air de refroidissement (36) vers l'inverseur prévu à une position à l'opposé dudit inverseur (19) pour aspirer l'air extérieur vers ledit inverseur (19), et d'un orifice d'échappement (38) prévu à une position à l'opposé dudit ventilateur de refroidissement (30) pour faire échapper l'air dans ledit compartiment machine (10) par ledit ventilateur de refroidissement (30),
**caractérisée en ce que**
l'air de refroidissement qui est amené à circuler dans ledit compartiment machine (10) par ledit ventilateur de refroidissement (30) est divisé en un premier trajet d'air de refroidissement (F1) dans lequel l'air de refroidissement s'écoule en entrant depuis ledit orifice d'entrée d'air de refroidissement (35) destiné à refroidir ledit réservoir d'huile (20) et dirigé vers ledit orifice d'échappement (38), et en un second trajet d'air de refroidissement (F2) dans lequel l'air de refroidissement s'écoule en entrant depuis ledit orifice d'entrée d'air de refroidissement (36) pour l'inverseur afin de refroidir ladite pompe hydraulique (17), ledit moteur électrique (18), et ledit inverseur (19), et dirigé vers ledit orifice d'échappement (38).

2. Machine de chantier électrique selon la revendication 1, dans laquelle
un trou de communication (39) pour permettre audit compartiment machine (10) et audit compartiment batterie (11) de communiquer l'un avec l'autre est prévu dans ladite plaque de cloisonnement (7), et
un ventilateur auxiliaire (40) destiné à mener l'air à l'intérieur dudit compartiment batterie (11) jusque dans ledit compartiment machine (10) à travers ledit trou de communication (39) est prévu dans ladite plaque de cloisonnement (7).

3. Machine de chantier électrique selon la revendication 1, dans laquelle
une plaque de support moteur/pompe (12) en forme de plaque plane pour supporter ledit moteur électrique (18) et ladite pompe hydraulique (17) est prévue sur ledit châssis de corps de véhicule (5), et un orifice d'entrée d'air de refroidissement (37) pour moteur/pompe destiné à aspirer l'air extérieur en direction dudit moteur électrique (18) et de ladite pompe hydraulique (17) est prévu dans ladite plaque de support moteur/pompe (12).

4. Machine de chantier électrique selon la revendication 1, dans laquelle
ledit moteur électrique (18) est couvert par un carter moteur (18B) ayant une chemise à eau, et ledit inverseur (19) est couvert par un carter d'inverseur (19B) qui loge un circuit inverseur (19A) et qui possède une chemise à eau, de l'air de refroidissement étant agencé pour être mis en circulation à travers les chemises à eau dudit carter de moteur (18B) et dudit carter d'inverseur (19B).

5. Machine de chantier électrique selon la revendication 4, dans laquelle
ledit échangeur de chaleur (21) est constitué par un dispositif de refroidissement d'huile (22) et par un radiateur (23), ledit dispositif de refroidissement d'huile (22) étant adapté pour refroidir l'huile hydraulique qui est recyclée vers ledit réservoir d'huile (20), ledit radiateur (23) étant adapté pour refroidir l'eau de refroidissement qui s'écoule à travers lesdites chemise à eau dudit carter de moteur (18B) et dudit carter d'inverseur (19B).

6. Machine de chantier électrique selon la revendication 1, dans laquelle
ledit corps de véhicule est constitué par une structure de déplacement inférieure automotrice (2) et par une structure supérieure rotative (3) qui est montée avec possibilité de pivotement sur ladite structure de déplacement inférieure (2), et ledit châssis de corps de véhicule (5) constitue une structure de support de ladite structure supérieure rotative (3).
